(19) **Europäisches Patentamt**
**European Patent Office**
**Office européen des brevets**

(11) Veröffentlichungsnummer : **0 320 035 B1**

(12) # EUROPÄISCHE PATENTSCHRIFT

(45) Veröffentlichungstag der Patentschrift :
19.06.91 Patentblatt 91/25

(51) Int. Cl.⁵ : **B64F 1/06**

(21) Anmeldenummer : 88202615.6

(22) Anmeldetag : 22.11.88

(54) **Vorrichtung zum Beschleunigen von Körpern, insbesondere mobiles Katapult für Flugkörper.**

(30) Priorität : 10.12.87 CH 4815/87

(43) Veröffentlichungstag der Anmeldung :
14.06.89 Patentblatt 89/24

(45) Bekanntmachung des Hinweises auf die
Patenterteilung :
19.06.91 Patentblatt 91/25

(84) Benannte Vertragsstaaten :
AT BE CH DE ES FR GB GR IT LI LU NL SE

(56) Entgegenhaltungen :
DE-A- 1 941 910
DE-B- 1 288 446
DE-C- 515 648
DE-C- 528 221
GB-A- 2 132 577
US-A- 2 289 766

(73) Patentinhaber : Schweizerische
Eidgenossenschaft vertreten durch das
Eidgenössisches Flugzeugwerk Emmen der
Gruppe für Rüstungsdienste
CH-6032 Emmen (CH)

(72) Erfinder : Monkewitz, Martin, Dr.
Felsbergstrasse 6
CH-6006 Luzern (CH)

(74) Vertreter : Frauenknecht, Alois J. et al
c/o PPS Polyvalent Patent Service AG,
Mellingerstrasse 1 Postfach 2100
CH-5400 Baden (CH)

EP 0 320 035 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zum Beschleunigen von Körpern auf einer Längsbahn, insbesondere von Flugkörpern beim Start, wobei der Körper mittelbar oder unmittelbar über ein aufwickelbares Antriebsseil durch wenigstens einen stationären Motor auf der Längsbahn beschleunigt wird und wobei die Beschleunigungsstrecke einen ersten positiven und einen zweiten negativen Beschleunigungsbereich aufweist.

Im weiteren bezieht sich der Erfindungsgegenstand auf dessen bevorzugte Verwendung.

Bekanntlich werden Gegenstände, Flugkörper etc. durch mechanische, pneumatische oder pyrotechnische Antriebe zur Verkürzung ihrer Startbahn fremdbeschleunigt. Werden hierzu, beispielsweise am Ende einer Längsbahn, Seilzüge eingesetzt, zeigt es sich, dass beim Abkoppeln des beschleunigten Körpers vom Seil an diesem und in der Umgebung Beschädigungen entstehen.

Aus der DE-C-515 648 ist ein Katapult mit einem als Energiespeicher dienenden Schwungrad bekannt. Das zu beschleunigende Flugzeug wird auf einem Startwagen gelagert, welcher anschliessend durch ein Zugseil beschleunigt wird. Das Seil wird dabei durch einen Elektromotor über eine konisch ausgestaltete Trommel und über ein Schwungrad mit Planetengetriebe aufgewickelt. Nach der Trennung des Flugzeugs vom Startwagen wird die Seiltrommel durch eine autonome Bremseinrichtung zum Stillstand gebracht, sie verhindert insbesondere ein Rückwärtsdrehen der Seiltrommel, so dass der Startwagen auf kurzem Wege abgebremst wird. Diese Vorrichtung erfordert ein Schwungrad mit relativ grossem Durchmesser und hoher Masse und bedingt vorgängig ein Hochfahren des Rades auf seine maximale Drehzahl ; durch ein notwendiges sanftes Einkoppeln der Energie kann erst am Ende der Bahn die volle Beschleunigung übertragen werden, so dass eine lange Startstrecke erforderlich ist. Die beim Einkoppeln erfolgte Regelung der Beschleunigung der Seiltrommel sowie die nach dem Abstossen des Flugzeugs im Schwungrad verbliebene Bewegungsenergie werden durch die Bremseinrichtung weitgehend in Wärme umgesetzt.

Es ist daher Aufgabe der Erfindung, eine Vorrichtung zum Beschleunigen von Körpern auf einer Längsbahn zu schaffen, welche die Nachteile des Bekannten nicht aufweist, optimale Beschleunigungen in kurzer Zeit erzielt und insbesondere zum Start von zivilen und militärischen, unbemannten Aufklärungsflugzeugen geeignet ist.

Es sollen nicht oder nur beschränkt roll- oder gleitfähige Flugkörper ebenso vorteilhaft beschleunigt werden können, wie solche ohne Roll- oder Gleiteinrichtung.

Erfindungsgemäss wird dies dadurch erzielt, dass der Seilwickelkörper wenigstens annähernd am Ort der maximalen Bahn-Geschwindigkeit des Körpers angeordnet ist, und dass das Seilende nach dessen Überführen vom Bereich zunehmender Bahngeschwindigkeit in den Bereich abnehmender Bahngeschwindigkeit den Aufwickelkörper und den Motor entgegen der ursprünglichen Drehrichtung bis zum Stillstand abbremst und anschliessend in der entgegengesetzten Drehrichtung beschleunigt, wobei ein Teil des Seils vom Wickelkörper abrollt und sich die noch vorhandene kinetische Energie im Motor rekuperiert.

Die erfindungsgemässe Lehre lässt sich unmittelbar bei roll- oder gleitfähigen Körpern einsetzen ; ebenso mittelbar durch Verwendung beispielsweise eines Laufwagens für beliebige Körper.

Es hat sich als sehr vorteilhaft erwiesen, den Wickelkörper direkt auf der Achse des Antriebs und unterhalb der Längsbahn anzuordnen, vgl. Anspruch 2. Diese Konfiguration ermöglicht in einfachster Weise das Beschleunigen des Körpers bzw. seines Laufwagens. Nach dem Überfahren des Orts des Wickelkörpers, auf der Längsbahn, wirkt das Seilende entgegen der ursprünglichen Drehrichtung des Wickelkörpers ; es erfolgt dadurch ein rasches Abbremsen des Motors und anschliessend dessen Drehrichtungsumkehr.

Bewährt hat sich das in Anspruch 3 erwähnte Flachband, da dieses ein ideales Wickelverhalten und eine optimale Bruchfestigkeit aufweist.

Als Antriebselement eignen sich besonders vorteilhaft zwei zusammengeschaltete Hydraulikmaschinen gemäss Anspruch 4.

Diese Hydraulikmaschinen arbeiten mit gleich hohem Wirkungsgrad, sowohl als Motoren als auch als Pumpen, Anspruch 5, und erlauben eine ideale Rekuperation der beim Abbremsen des Laufwagens und/oder des Seils – nach dem Abheben oder Abkoppeln des Körpers – noch vorhandenen restlichen kinetischen Energie.

Der Gasdruck-Zwischenspeicher, Anspruch 6, kann in einfachster Weise ein hohes Energiepotential bereitstellen und lässt sich ebenfalls für die Aufnahme der rekuperierten Energie verwenden.

Die Aufladung gemäss Anspruch 7 kann durch eine Hochdruckpumpe kleinster Abmessungen über einen längeren Zeitraum erfolgen.

Als Antrieb bewährt hat sich ein Elektromotor entsprechend Anspruch 8, der als Gleichstrommotor ausgebildet, Anspruch 9, von einer konventionellen Fahrzeugbatterie gespeist ist.

Die Mobilität der Vorrichtung ist durch deren Zusammenfügen aus Einzelelementen, Anspruch 10, gewährleistet.

Besonders bewährt hat sich die Vorrichtung auf Fahrzeugen für den katapultartigen Abschuss von Flugkörpern, Anspruch 11, insbesondere von unbemannten Aufklärungsflugzeugen.

Nachfolgend wird anhand von Zeichnungen ein praktisch realisiertes Ausführungsbeispiel näher beschrieben.

Es zeigen :

Fig. 1 ein zum Transport mit Leichtfahrzeugen geeignetes Katapult zum Abschuss von Flugkörpern,

Fig. 2 einen Ausschnitt der Vorrichtung Fig. 1, in vergrösserter Darstellung, im Bereich ihres Antriebs,

Fig. 3 die Darstellung Fig. 2 im Zeitpunkt nach dem Abheben des Flugkörpers,

Fig. 4 den Antriebsmechanismus mit Wickelkörper, in vereinfachter Darstellung,

Fig. 5 den Laufwagen aus Fig. 1 in einer Teil-Schnittdarstellung auf einem Laufrohr,

Fig. 6 ein vereinfachtes Schema der Oel-Hydraulik mit ihren Steuergliedern,

Fig. 7a die charakteristischen kinematischen Grössen des Antriebs und des Laufwagens und

Fig. 7b die zur Abszisse des Diagramms 7a massstäblich eingezeichneten Distanzen zwischen Umlenkrolle und Wickelkörper.

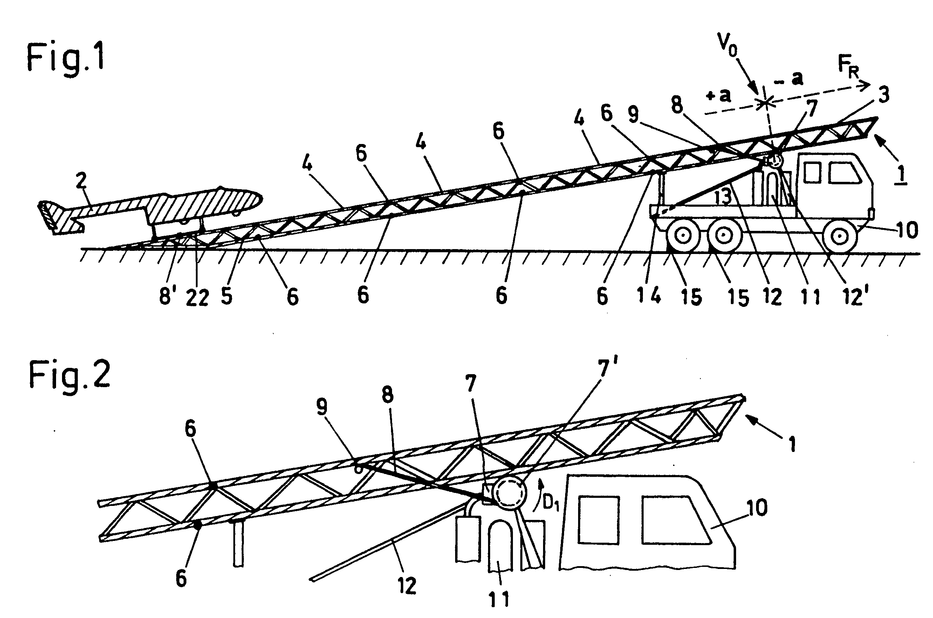

In Fig. 1 ist die Längsbahn eines Katapults mit 1 bezeichnet. An deren Ende befindet sich ein auf einem Laufwagen 22 aufgesetzter Körper 2, ein unbemanntes Aufklärungsflugzeug in Flugrichtung $F_R$. Die Längsbahn 1 ist aus einzelnen Elementen 3 bis 5 zusammengefügt ; das Element 3 ist auf einem Fahrzeug 10 befestigt, die Elemente 4 und 5 sind transportabel ausgestaltet, wobei das Auflageelement 5 einseitig eine Keilform aufweist und die Längsbahn 1 endseitig abstützt. Sämtliche Elemente 3 bis 5 sind an Kupplungsstellen 6, welche aus in Rohre eingreifenden Zapfen mit entsprechenden Verriegelungen bestehen, ausgestaltet. Auf der Ladefläche 13 des Transport-Fahrzeugs 10 (Steyr-Pinzgauer 6 × 6) befindet sich die Hydraulik-Versorgung 11 und darüber der Motor 7, bestehend aus zwei Hydraulik-Maschinen. Ferner ist ein Wickelkörper 7' ersichtlich, vgl. Fig. 2, auf den ein Seil 8 – ein handelsübliches Flachband aus Polyester – aufgewickelt wird. Das andere Ende des Seils 8 ist im Zentrum des Laufwagens 22 an einem Befestigungsbolzen 8' drehbar verankert. Das Seil 8 ist zudem über eine Umlenkrolle 9, parallel zur Längsbahn 1, geführt. Diese Längsbahn 1 ist auf der Ladefläche 13 durch Schräg-Stützen 12, 12' und Vertikal-Stützen 14 gesichert. Zusätzlich sind den Hinterrädern des Transport-Fahrzeugs 10 Keile 15 unterlegt.

Aus der Fig. 2 sind, in vergrösserter Darstellung, die Einzelheiten, Fig. 1, besser ersichtlich. Zusätzlich ist die Drehrichtung $D_1$, des Motors 7, eingezeichnet. Diese Drehrichtung, sowie die Führung des Seils 8 um die Umlenkrolle 9, entspricht dem ursprünglichen, beim Start des Körpers 2 vorhandenen Zustand.

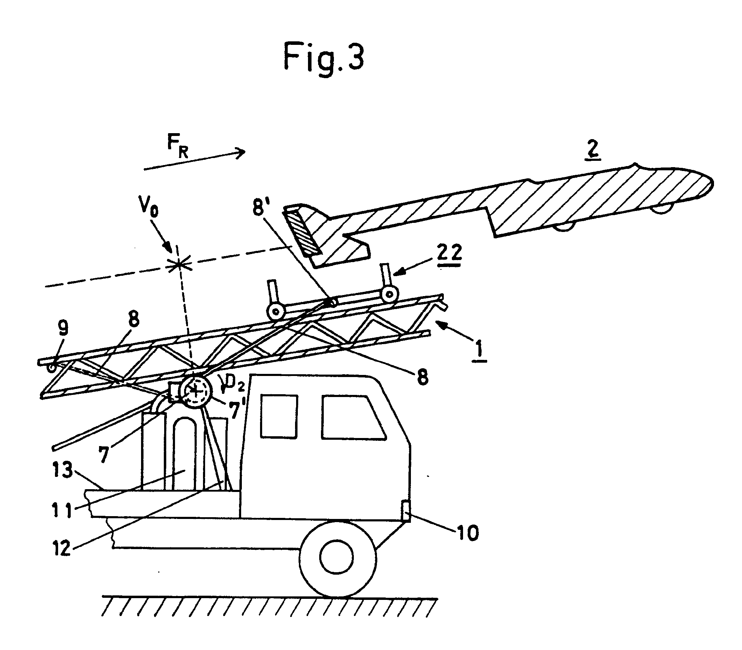

Im Gegensatz dazu zeigt Fig. 3 den Zustand nach dem Abheben des Flugzeugs mit der entsprechenden Seilführung beim Bremsen des Laufwagens 22. Es ist dabei ersichtlich, dass eine Drehrichtungs-Umkehr $D_1$ zu $D_2$ des Motors 7 erfolgt ist, welche beim Abwickeln – des vorher beim Beschleunigen des Körpers 2 aufgewickelten Teils – die noch im Laufwagen 22 vorhandene kinetische Energie rekuperiert, wobei der Motor 7 als hydraulische Pumpe wirkt.

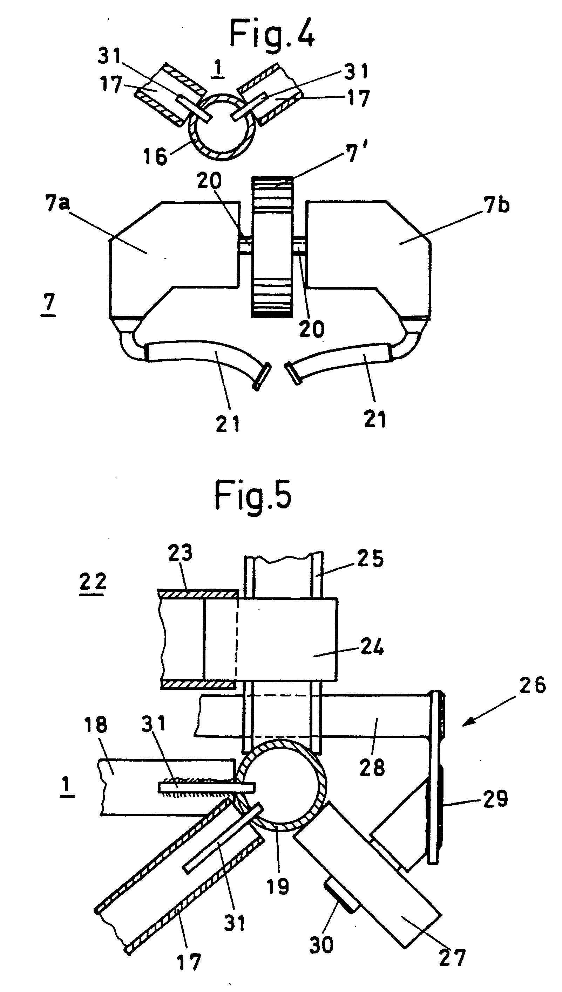

Einzelheiten des Antriebs sowie dessen Zuordnung zur Längsbahn 1 sind der Fig. 4 zu entnehmen. Zwei handelsübliche Hydraulik-Maschinen 7a und 7b (Volvo F11-250) sind mit ihren Wellen 20 über den Wickelkörper 7' miteinander gekuppelt. Die angeschlossenen Hochdruck-Leitungen 21 stehen mit der darunter befindlichen – nicht dargestellten – Hydraulik-Versorgung in Verbindung.

Die über dem Motor 7 befindliche, ausschnittweise dargestellte Längsbahn 1 weist ein Dreieckprofil auf, ersichtlich sind deren schräge Verstrebungs-Rohre 17 und das Basisrohr 16. Diese Verstrebungs-Rohre 17 münden endseitig in Lauf-Rohre 19, vgl. Fig. 5, welche ihrerseits horizontale Verstrebungs-Rohre 18 aufweisen und der Laufbahn ein gittermast-ähnliches Aussehen vermitteln. Zusammengefügt ist dieses Gitter durch angeschweisste Knotenbleche 31.

Auf der Längsbahn 1 befindet sich der Laufwagen 22, im wesentlichen bestehend aus einem Achs-Rohr 23 mit Achs-Zapfen 24 und einer darauf befindlichen Laufrolle 25, mit einem Polyurethane-Belag. Zusätzlich sind vorgesehen : Eine Seitenführung 26 mit einer Seitenführungsrolle 27 mit flacher Lauffläche, welche über eine Horizontal-Strebe 28 und einen Stützflansch 29 einen Achszapfen 30 bilden. Diese Strebe 28 steht ebenfalls mechanisch mit dem Achs-Rohr 23 in Verbindung.

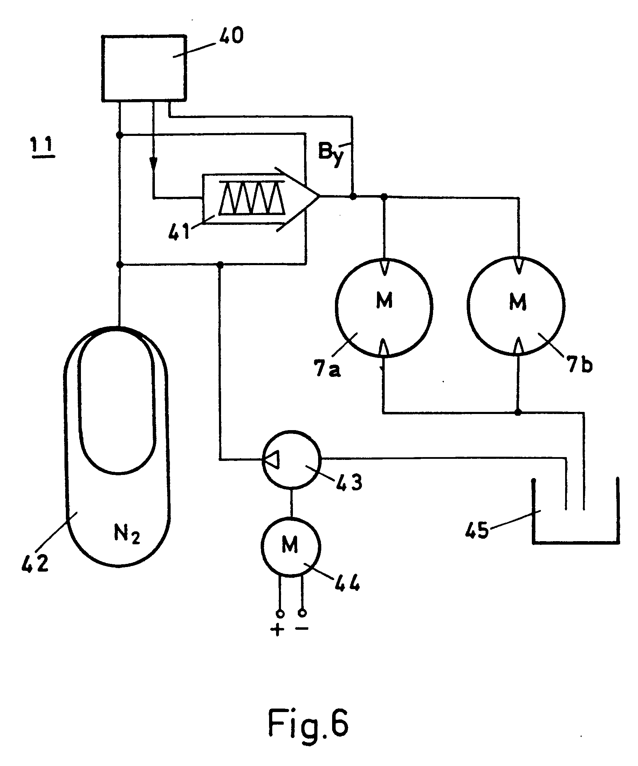

Das Hydraulik-Schaltbild, Fig. 6, zeigt in vereinfachter Weise die Energieversorgung der Vorrichtung. Eine an sich bekannte Ventilsteuerung 40 ist mit einem Cartridge-Ventil 41 (Mannesmann-Rexroth, LC 50) und einem Gasdruck-Zwischenspeicher, einem Blasenspeicher 42 verbunden. An den Ausgang des Cartridge-Ventils 41 sind die beiden Hydraulik-Maschinen 7a und 7b angeschlossen. Ihre Ausgänge münden in einen Oel-Behälter 45 mit 20 l Oel-Volumen. Der handelsübliche Blasenspeicher 42 (OLAER, Typ IHV 24-330) erlaubt eine Aufladung auf 330 bar.

Als Antriebselement dient ein 24 Volt Elektromotor 44 (American Bosch) mit 0,5 kW Wellen-Leistung. Als Hochdruck-Pumpe 43 dient eine kleine handelsübliche Kolbenpumpe (Leduc PB 36,5) mit 0,28 cm³ Fördervolumen pro Umdrehung ; sie ist für einen Maximaldruck von 350 bar ausgelegt.

Sämtliche vorstehend beschriebenen Komponenten sind im Handel erhältlich ; hierzu gehört auch das als Seil verwendete 75 mm breite Polyesterband mit 8000 kg Mindestbruchfestigkeit.

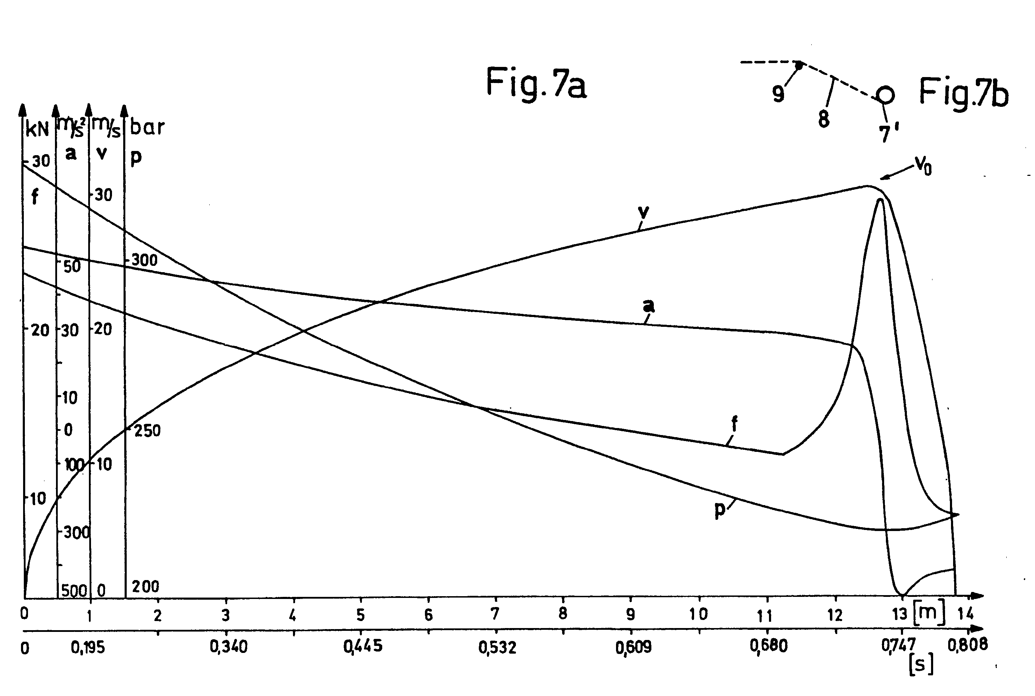

Das Diagramm, Fig. 7a, – das Ergebnis einer Computer-Simulation – zeigt sämtliche für den Antrieb und den Laufwagen charakteristischen Grössen auf. Es ist zudem so skaliert, dass die Kinematik mit den Längendimensionen der Längsbahn 1 korreliert: Vor dem Start dreht der Elektromotor 44 die Hochdruck-Pumpe 43 während 8 bis 10 min. und lädt den Blasenspeicher 42 auf einen Druck von max. 300 bar. Durch eine in der Ventilsteuerung 40 eingebaute Vorspannsequenz mit an sich bekannter Bypass-Schaltung By, vgl. Fig. 6, wird der Druck p den Hydraulik-Maschinen 7a und 7b beim Start "sanft" zugeführt. Diese beschleunigen den Laufwagen 22 mit einer Anfangs-Beschleunigung a von 54 m/s$^2$ auf einem Weg von 12,25 m während ca. 0,72 sec. Im Zeitpunkt des Abhebens des Körpers 2 des Flugzeugs, wird die Beschleunigung a = 19,5 m/s$^2$ auf negative Werte gebracht, was ein Abheben des Flugzeugs mit einer Geschwindigkeit $V_0$ von 30 m/s bewirkt.

Die Führung des Seils 8 um die Rolle 9 und den Wickelkörper 7' ist im Diagramm als Fig. 7b gestrichelt dargestellt. Beim Überfahren des Laufwagens 22 wirkt das Seil 8 zuerst als Motorbremse, nach dem Drehrichtungswechsel von $D_1$ zu $D_2$ wirkt der Motor 7 als Oel-Pumpe, was eine geringe Wiederaufladung des Blasenspeichers 42 bewirkt. Während des ganzen Ablaufs bleibt die Bandspannung f des Seils 8 mit ihrem Maximalwert von weniger als 28 kN innerhalb der zulässigen Sicherheitsgrenzen.

Sämtliche vorstehend aufgeführten Berechnungen beruhen auf einem Körper 2 mit einer Abflug-Masse von 400 kg. Bei entsprechender Auslegung der Vorrichtung und einer geeigneten Wahl des Speicherdrucks lassen sich die Systemgrenzen in einem weiten Bereich an die Gegebenheiten anpassen.

Die Vorrichtung zeichnet sich durch eine sehr hohe Betriebssicherheit, durch ihre Selbstversorgung vom Fahrzeug und ihre einfache Bedienbarkeit und Wartungsfreiheit aus. Selbstverständlich ist deren Anwendung nicht auf lineare Führungsbahnen beschränkt, durch geeignete Umlenkung der Seile bzw. des Flachbands können leicht auch Beschleunigungen von Körpern auf bogenförmigen Bahnen realisiert werden.

## Ansprüche

1. Vorrichtung zum Beschleunigen von Körpern auf einer Längsbahn (1), insbesondere von Flugkörpern (2) beim Start, wobei der Körper (2) mittelbar oder unmittelbar über ein aufwickelbares Antriebsseil (8) durch wenigstens einen stationären Motor (7) auf der Längsbahn (1) beschleunigt wird und wobei die Beschleunigungsstrecke einen ersten positiven (+a) und einen zweiten negativen Beschleunigungsbereich (–a) aufweist, dadurch gekennzeichnet, dass der Seilwickelkörper (7') wenigstens annähernd am Ort der maximalen Bahn-Geschwindigkeit ($V_0$) des Körpers (2) angeordnet ist, und dass das Seilende (8') nach dessen Überführen vom Bereich zunehmender Bahngeschwindigkeit in den Bereich abnehmender Bahngeschwindigkeit den Wickelkörper (7') und den Motor (7) entgegen der ursprünglichen Drehrichtung ($D_1$) bis zum Stillstand abbremst und anschliessend in der entgegengesetzten Drehrichtung ($D_2$) beschleunigt, wobei ein Teil des Seils (8) vom Wickelkörper (7') abrollt.

2. Vorrichtung nach Anspruch 1, dadurch gekennzeichnet, dass der Wickelkörper (7') auf der Achse des Motors (7) und unterhalb der Längsbahn (1) angeordnet ist, und dass wenigstens eine Umlenkrolle (9) für das Seil (8) auf der Seite der positiven Bahnbeschleunigung (+a) vorgesehen ist.

3. Vorrichtung nach Anspruch 2, dadurch gekennzeichnet, dass das Seil (8) als Flachband ausgebildet ist und aus Polyester besteht.

4. Vorrichtung nach einem der vorangehenden Ansprüche, dadurch gekennzeichnet, dass der Motor (7) aus zwei Hydraulikmaschinen (7a, 7b) mit Axialkolben besteht.

5. Vorrichtung nach Anspruch 4, dadurch gekennzeichnet, dass zum Transport des Körpers (2) am Seilende (8') ein Laufwagen (22) angeschlossen ist, dessen kinetische Energie sich im Bereich abnehmender Bahngeschwindigkeit (–a) nach erfolgter Drehrichtungsumkehr ($D_1/D_2$) im Motor (7 bzw. 7a, 7b) zumindest teilweise rekuperiert.

6. Vorrichtung nach Anspruch 4, dadurch gekennzeichnet, dass die Oel-Versorgung der Hydraulikmaschinen (7a, 7b) über einen Gasdruck-Zwischenspeicher (42) geschaltet ist.

7. Vorrichtung nach Anspruch 6, dadurch gekennzeichnet, dass die Aufladung des Gasdruck-Zwischenspeichers (42) über eine Hochdruck-Pumpe (43) erfolgt, welche auf dem Kolbenprinzip arbeitet.

8. Vorrichtung nach Anspruch 7, dadurch gekennzeichnet, dass die Hochdruck-Pumpe (43) durch einen Elektromotor (44) angetrieben ist.

9. Vorrichtung nach Anspruch 8, dadurch gekennzeichnet, dass der Elektromotor (44) ein von einer Fahrzeug-Batterie gespeister Gleichstrom-Motor ist.

10. Vorrichtung nach Anspruch 1, dadurch gekennzeichnet, dass die Längsbahn (1) aus Einzel-Elementen (3, 4, 5) zusammengesetzt ist und diese über Rohr-Zapfen und Verriegelungen an Kupplungsstellen (6) miteinander verbunden sind.

11. Verwendung der Vorrichtung nach einem der vorangehenden Ansprüche als mobiles Katapult für Flugkörper auf Fahrzeugen.

## Claims

1. A device for the acceleration of bodies on a longitudinal track (1), in particular of flying bodies (2) at their take-off, the body (2) being indirectly or directly accelerated on the longitudinal track (1) via a coilable driving cable (8) and by means of at least one stationary motor (7) and the distance of acceleration having a first, positive acceleration section (+a) and a second, negative acceleration section (−a), characterized in that the cable winding body (7') is arranged at least substantially at the point of the maximum track-speed ($V_0$) of the body (2), and in that after having passed over from the section of increasing track-speed to the section of decreasing track-speed, the cable end (8') brakes the winding body (7') and the motor (7) against the original direction of rotation ($D_1$) until they are at a standstill and it then accelerates them in the opposite direction of rotation ($D_2$), part of the cable (8) unwinding from the winding body (7').

2. A device in accordance with Claim 1, characterized in that the winding body (7') is arranged on the shaft of the motor (7) and below the longitudinal track (1), and in that at least one guide roller (9) for the cable (8) is provided on the positive acceleration (+a) side.

3. A device in accordance with Claim 2, characterized in that the cable (8) is constructed as a flat belt and is composed of polyester.

4. A device in accordance with any one of the preceding Claims, characterized in that the motor (7) is composed of two hydraulic engines (7a, 7b) with axial pistons.

5. A device in accordance with Claim 4, characterized in that in order to transport the body (2) a travelling carriage (22) is attached to the cable end (8'), the kinetic energy of this travelling carriage being at least partially recuperated in the section of decreasing track speed (−a) after a reversal in the direction of rotation ($D_1/D_2$) has taken place in the motor (7 or 7a, 7b).

6. A device in accordance with Claim 4, characterized in that the oil supply to the hydraulic engines (7a, 7b) is actuated via a gas-pressure intermediate store (42).

7. A device in accordance with Claim 6, characterized in that the charging of the gas-pressure intermediate store (42) takes place via a high-pressure pump (43) which operates on the piston principle.

8. A device in accordance with Claim 7, characterized in that the high-pressure pump (43) is driven by an electric motor (44).

9. A device in accordance with Claim 8, characterized in that the electric motor (44) is a direct-current motor energized by a vehicle battery.

10. A device in accordance with Claim 1, characterized in that the longitudinal track (1) is composed of individual elements (3, 4, 5) which are connected to one another at coupling pointe (6) via pipe-pegs and locking mechanisms.

11. Use of the device in accordance with any one of the preceding Claims as a mobile catapult, for flying bodies, on vehicles.

## Revendications

1. Dispositif pour accélérer des objets sur une trajectoire longitudinale (1), en particulier des objets volants (2) lors du décollage, l'objet (2) étant accéléré indirectement ou directement sur la trajectoire longitudinale (1) par un moteur stationnaire (7), par l'intermédiaire d'un câble d'entraînement (8) enroulable, et la distance d'accélération comprenant une première zone d'accélération positive (+a) et une seconde zone d'accélération négative (−a), **caractérisé en ce que l'enrouleur de câble (7') est disposé au moins approximativement à l'endroit de la vitesse maximale ($v_0$) sur la trajectoire de l'objet (2), et que, après son passage de la zone de la vitesse croissante sur la trajectoire à la zone de la vitesse décroissante sur la trajectoire, l'extrémité du câble (8') freine l'enrouleur (7') et le moteur (7) jusqu'à l'arrêt dans la direction opposée au sens de rotation initial ($D_1$), puis les accélère dans le sens de rotation opposé ($D_2$), une partie du câble (8) se déroulant de l'enrouleur (7').

2. Dispositif selon la revendication 1, caractérisé en ce que l'enrouleur (7') est monté sur l'axe du moteur (7) et en dessous de la trajectoire longitudinale (1) ; et qu'au moins une poulie de renvoi (9) pour le câble (8) est prévue du côté de l'accélération positive (+a) sur la trajectoire.

3. Dispositif selon la revendication 2, caractérisé en ce que le câble (8) est conformé en bande plate et réalisé en polyester.

4. Dispositif selon l'une des revendications précédentes, caractérisé en ce que le moteur (7) est constitué de deux machines hydrauliques (7a, 7b) à pistons axiaux.

5. Dispositif selon la revendication 4, caractérisé en ce que pour le transport de l'objet (2), l'extrémité du câble (8') est rattachée à un chariot de roulement (22) dont l'énergie cinétique est récupérée au moins en partie dans le moteur (7 et respectivement 7a, 7b) dans la zone de vitesse décroissante sur la trajectoire (−a) après l'inversion du sens de rotation ($D_1/D_2$).

6. Dispositif selon la revendication 4, caractérisé en ce que l'alimentation en huile des machines hydrauliques (7a, 7b) se fait par l'intermédiaire d'un accumulateur intermédiaire de pression de gaz (42).

7. Dispositif selon la revendication 6, caractérisé en ce que la charge de l'accumulateur intermédiaire de pression de gaz (42) se fait par l'intermédiaire d'une pompe à haute pression (43) qui fonctionne d'après le principe du piston.

8. Dispositif selon la revendication 7, caractérisé en ce que la pompe à haute pression (43) est entraînée par un moteur électrique (44).

9. Dispositif selon la revendication 8, caractérisé en ce que le moteur électrique (44) est un moteur à courant continu alimente à partir d'une batterie d'automobile.

10. Dispositif selon la revendication 1, caractérisé en ce que la trajectoire longitudinale (1) est assemblée à partir d'éléments séparés (3, 4, 5) lesquels sont reliés les uns aux autres à des points d'accouplement (6) par l'intermédiaire des tourillons et des verrouillages.

11. Utilisation du dispositif selon l'une des revendications précédentes en tant que catapulte mobile pour engins volants sur des véhicules.

# Fig.1

$V_0$

$F_R$

+a  −a

2

4 6 4 6 4 6 9 8 7 3

1

13

10

8' 22 5 6 6 6 6 14 15 15 12 11 12'

# Fig.2

7'

9 8 7

6

6 1

$D_1$

10

6

12 11

EP 0 320 035 B1

# Fig.3

# Fig.4

# Fig.5

Fig.6

Fig.7a

Fig.7b